# EUROPEAN PATENT SPECIFICATION

(11) **EP 1 289 159 B1**
(45) Date of publication and mention of the grant of the patent: **08.03.2006**
(21) Application number: 02255986.8
(22) Date of filing: 28.08.2002
(51) Int. Cl.: H04B 1/50

(54) **High-frequency circuit device and mobile communiation apparatus**
Hochfrequenzschalteinrichtung und mobiles Kommunikationsgerät
Dispositif à circuit haute fréquence et dispositif mobile de communication

(30) Priority: 03.09.2001 JP 2001266200
(43) Date of publication of application: 05.03.2003
(73) Proprietor: MATSUSHITA ELECTRIC INDUSTRIAL CO., LTD., Kadoma-shi, Osaka 571-8501 (JP)
(72) Inventor: Kanazawa, Kunihiko, Mukou-shi, Kyoto 617-0006 (JP); Nakatsuka, Tadayoshi, Toyonaka-shi, Osaka 560-0005 (JP)
(74) Representative: Tothill, John Paul

(56) References cited:
- EP-A- 0 878 918
- EP-A- 0 893 882
- EP-A- 1 126 624
- US-A- 6 066 993

## Description

The present invention relates generally to a high-frequency circuit device that is used in a portable terminal such as a multiband mobile phone and has a plurality of transmission and reception amplifiers so as to conform to a plurality of different communication systems including a GSM system and a DCS system. More specifically, this invention relates to a technique for switching a plurality of transmission and reception signals with different frequency bands so as to conform to a desired communication system and the transmitting operation or the receiving operation that is being performed.

A high-frequency amplifier used in a mobile phone or the like is required first to have a function of amplifying signals lying within a predetermined frequency band, also to attain a lower distortion level so as to secure linearity between input and output, and still further to have a high degree of efficiency so as to achieve a reduction in power consumption. More particularly, in a high-frequency amplifier for transmission that is used in a mobile phone (multiband mobile phone) or the like that is operable at frequencies in frequency bands corresponding to a plurality of different standards, and requires higher power to be obtained by amplification, in addition to low distortion and high efficiency properties, the integration of a plurality of amplifiers corresponding respectively to each of a plurality of different frequency bands is highly desired since the integration directly affects size and weight reductions of such a device.

Hereinafter, a conventional dual band mobile phone will be described as an example. The dual band mobile phone conforms to a GSM (Global System for Mobile Communications) system and a DCS (Digital Cellular System) system that is an extension to the GSM system, which have been proposed in Europe as standards that are based on a TDMA (Time Division Multiple Access) system. In the GSM system, a frequency band of approximately 900 MHz (transmitting frequency band: 890 MHz to 915 MHz, receiving frequency band: 935 MHz to 965 MHz) is used. In the DCS system, a frequency band of approximately 1.8 GHz (transmitting frequency band: 1,710 MHz to 1,785 MHz, receiving frequency band: 1,805 MHz to 1,880 MHz) is used.

EP 1126624 discloses a high frequency switch for a multiband telephone. Said high frequency switch includes two switches, wherein each of the switches includes two diodes and two transmission lines.

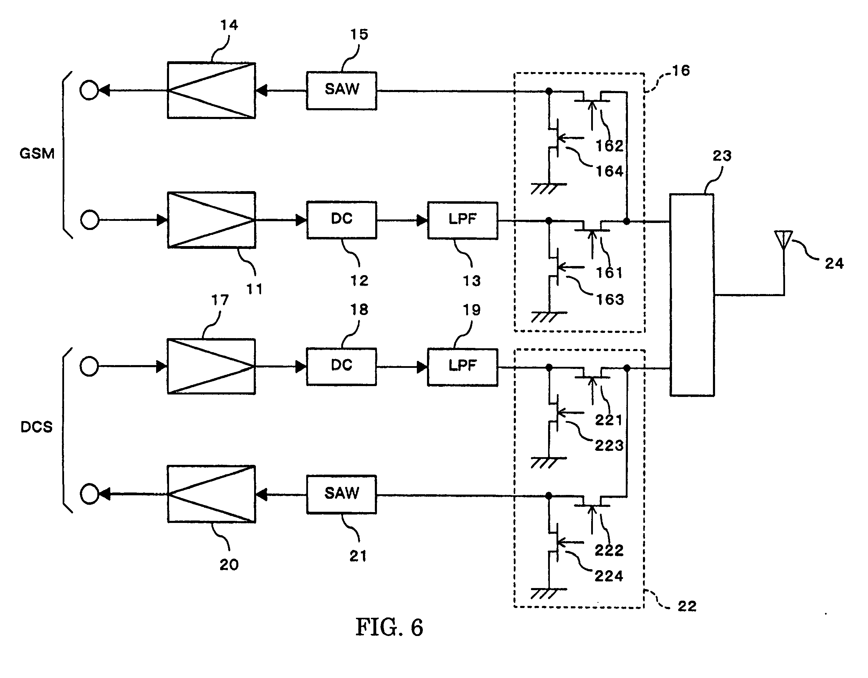

FIG. 6 is a circuit block diagram showing an example of a configuration of a front end portion in a conventional dual band mobile phone. As shown in FIG. 6, the front end portion has the following configuration. In one circuit corresponding to a GSM frequency band of approximately 900 MHz, on a transmission side, a first transmission amplifier 11, a first directional coupler (DC) 12, and a first low-pass filter 13 are provided. On a reception side, a first reception amplifier 14 and a first surface acoustic wave filter (SAW) 15 are provided. Further, there is provided a first switch circuit 16 that switches signal paths between the transmitting operation and the receiving operation.

In the other circuit corresponding to a DCS frequency band of approximately 1.8 GHz, on a transmission side, a second transmission amplifier 17, a second directional coupler (DC) 18, and a second low-pass filter 19 are provided. On a reception side, a second reception amplifier 20 and a second surface acoustic wave filter (SAW) 21 are provided. Further, there is provided a second switch circuit 22 that switches signal paths between the transmitting operation and the receiving operation.

Each of the first transmission amplifier 11, the first reception amplifier 14, the second transmission amplifier 17, and the second reception amplifier 20 is composed of a semiconductor element having a function of amplifying high-frequency signals, such as a bipolar transistor and a field-effect transistor that are made of GaAs or a MOS field-effect transistor that is made of silicon, and a matching circuit that is used for high frequency matching to the transistors.

The first directional coupler 12 and the second directional coupler 18 that are provided on the transmission sides supply outputs from the first transmission amplifier 11 and the second transmission amplifier 17 to the low-pass filter 13 and the low-pass filter19 with almost no loss, respectively. Further, by the first directional coupler 12 and the second directional coupler 18, a part of an output from each of the first transmission amplifier 11 and the second transmission amplifier 17 is extracted with a predetermined attenuation. The extracted part of the output is detected by a detector (not shown) and used to control the transmission power of each of the transmission amplifiers 11 and 17.

Further, the first low-pass filter 13 attenuates third-order harmonics from the first transmission amplifier 11 in the GSM circuit, and the second low-pass filter 19 attenuates second- and third-order harmonics from the second transmission amplifier 17 in the DCS circuit.

The first surface acoustic wave filter 15 and the second surface acoustic wave filter 21 prevent bypassing of transmission signals from the first transmission amplifier 11 and the second transmission amplifier 17 to the first reception amplifier 14 and the second reception amplifier 20, respectively.

In the GSM circuit, the first high-frequency switch circuit 16 is composed of a first transmission-side switching element 161, a first reception-side switching element 162, a second transmission-side switching element 163, and a second reception-side switching element 164 that are formed of a field-effect transistor or a bipolar transistor, respectively.

The first transmission-side switching element 161 is connected in series with the transmission signal path and switched on in the transmitting operation (switched off in the receiving operation) so as to conduct the transmission signal from the first transmission amplifier 11. The first reception-side switching element 162 is connected in series with the reception signal path and switched on in the receiving operation (switched off in the transmitting operation) so as to conduct a reception signal from an antenna 24. The second transmission-side switching element 163 is connected between a ground potential (GND) and the signal path and switched on when the first transmission-side switching element 161 is in an off-state (during the receiving operation) so that a feed-through component of a transmission signal in the first transmission-side switching element 161 is attenuated sufficiently: The second reception-side switching element 164 is connected between a ground potential (GND) and the signal path and switched on when the first reception-side switching element 162 is in an off state (during the transmitting operation) so that a feed-through component of a reception signal in the first reception-side switching element 162 is attenuated sufficiently

Furthermore, in the DCS circuit, the second high-frequency switch circuit 22 is composed of a first transmission-side switching element 221, a first reception-side switching element 222, a second transmission-side switching element 223, and a second reception-side switching element 224. Each of these switching elements has the same function as that of the corresponding switching element (denoted by a reference numeral with the same last digit) in the first high-frequency switch circuit 16.

Furthermore, a diplexer 23 is provided between the first and second high-frequency switch circuits 16 and 22 and the antenna 24. In a transmitting operation, the diplexer 23 couples a transmission signal in the GSM circuit or the DCS circuit into the common antenna 24. In a receiving operation, the diplexer 23 distributes a reception signal from the common antenna 24 to the GSM circuit or the DCS circuit. Further, the diplexer 23 has a function of suppressing harmonics generated in the first high-frequency switch circuit 16 and the second high-frequency switch circuit 22.

However, a conventional transmitting/receiving high-frequency circuit as described above has presented the following problem. That is, in the first high-frequency switch circuit 16 of the GSM circuit and the second high-frequency switch circuit 22 of the DCS circuit, the first transmission-side switching element 161 and the first transmission-side switching element 221 are provided in series connection with the signal paths, respectively, and thus large transmission losses are produced in these transmission-side switching elements. Because of this, the transmission amplifiers are required to have higher output power levels, thereby causing an increase in power consumption.

Specifically, when the first transmission-side switching element 161 connected with the path of a transmission signal from the first transmission amplifier 11 in the GSM circuit is, for example, a pin diode, a transmission loss of as large as 0.5 dB to 1 dB is produced. Alternatively, when the first transmission-side switching element 161 is a GaAs field-effect transistor, a transmission loss of as large as 0.4 dB to 0.7 dB is produced. As a result, the current of the transmission amplifier 11 in the GSM circuit is increased by 10% to 30%.

Furthermore, in a multiband mobile phone conforming to three or more communication systems, rather than the dual band mobile phone conforming to the two communication systems of GSM and DCS, the first transmission side switching element is increased in number in proportion to the number of the communication systems. This leads to a further increase in power consumption, which is disadvantageous.

With the foregoing in mind, it is an object of the present invention to provide a high-frequency circuit device that can be used in a multiband mobile phone or the like and that in particular reduces transmission losses in high-frequency switch circuits so that the output power of transmission amplifiers can be decreased, thereby achieving a substantial reduction in power consumption. It is also an object of the present invention to provide a mobile communication apparatus that mounts the high-frequency circuit device.

In order to achieve the aforementioned object, a high-frequency circuit device according to the present invention includes a plurality of transmission amplifiers for amplifying and supplying to an antenna a plurality of transmission signals corresponding to a plurality of different frequency bands (for example, the GSM frequency band of approximately 900 MHz and the DCS frequency band of approximately 1.8 GHz), a plurality of reception amplifiers for amplifying a plurality of reception signals from the antenna corresponding to a plurality of different frequency bands, and a plurality of high-frequency switch circuits corresponding respectively to each of the plurality of frequency bands that are provided between the plurality of transmission amplifiers and the plurality of reception amplifiers and the antenna, and perform selecting of signal paths corresponding to a desired frequency band and switching of the signal paths between a transmitting operation and a receiving operation. The plurality of switch circuits are composed at least of a first high-frequency switch circuit and a second high-frequency switch circuit. The first high-frequency switch circuit is provided so as to correspond to a lower frequency band of the plurality of frequency bands, and the second high-frequency switch circuit is provided so as to correspond to a higher frequency band of the plurality of frequency bands. The first high-frequency switch circuit includes a phase adjusting unit connected in series with a first transmission signal path, a first switching element connected in series with a first reception signal path, and second switching elements connected between the first transmission and reception signal paths and ground potentials and on the first transmission amplifier side of the phase adjusting unit and on the first reception amplifier side of the first switching element, respectively. The second high-frequency switch circuit includes third switching elements connected in series with a second transmission signal path and a second reception signal path, respectively, and fourth switching elements connected between the second transmission and reception signal paths and ground potentials and on the second transmission amplifier side of one of the third switching elements and on the second reception amplifier side of the other of the third switching elements, respectively.

Preferably, the high-frequency circuit device according to the present invention includes a diplexer that is connected between the first and second high-frequency switch circuits and the antenna so as to couple a transmission signal from the first high-frequency switch circuit or the second high-frequency switch circuit into the antenna in the transmitting operation and distribute a reception signal from the antenna to the first high-frequency switch circuit or the second high-frequency switch circuit in the receiving operation, and the phase adjusting unit is formed of a strip line having a length corresponding to 1/4 of a wavelength in the lower frequency band.

Alternatively, it is preferable that the first and second high-frequency switch circuits are connected directly with the antenna, the phase adjusting unit is formed of a strip line having a length corresponding to 1/4 of a wavelength in the higher frequency band, and the first high-frequency switch circuit includes a matching circuit for reception that is connected between the strip line and the first switching element and performs impedance matching. In this case, the first to fourth switching elements are preferably formed of a GaAs field-effect transistor, respectively.

Preferably, in the high-frequency circuit device according to the present invention, the first and second transmission amplifiers and the first and second high-frequency switch circuits are integrated into a module on a common substrate.

Alternatively, it is preferable that in the high-frequency circuit device according to the present invention, the first and second transmission amplifiers, the first and second high-frequency switch circuits, and the diplexer are integrated into a module on a common substrate.

Furthermore, preferably, the first and second reception amplifiers also are integrated into the module on the common substrate.

Preferably, in the high-frequency circuit device according to the present invention, first and second directional couplers that receive output signals from the first and second transmission amplifiers, respectively, and first and second low-pass filters that receive output signals from the first and second directional couplers and output to the first and second high-frequency switch circuits, respectively, are provided and integrated into the module on the common substrate.

Furthermore, preferably, in the high-frequency circuit device according to the present invention, first and second surface acoustic wave filters that receive reception signals from the first and second high-frequency switch circuits, respectively, and output to the first and second reception amplifiers, respectively, are provided and integrated into the module on the common substrate.

In order to achieve the aforementioned object, a mobile communication apparatus according to the present invention mounts the high-frequency circuit device according to the present invention.

According to the aforementioned configurations, the transmission loss in the first high-frequency switch circuit corresponding to the lower frequency band is reduced so that output power of the transmission amplifier is decreased, thereby achieving a substantial reduction in power consumption.

Furthermore, circuit components including the first and second transmission amplifiers and the first and second high-frequency switch circuits and other circuit components as required are preferably integrated into a module on a common substrate. Thus, size and weight reductions can be achieved, and phase adjustment and impedance adjustment can be performed easily in the phase adjusting unit.

Moreover, the high-frequency circuit device is preferably formed into a module on a common substrate. Thus, size and weight reductions and a reduction in power consumption can be achieved, and a significant advantage is provided when the high-frequency circuit device is applied to a mobile communication apparatus such as a mobile phone.

A number of preferable embodiments will now be described by way of example only and with reference to the accompanying drawings, in which:
FIG. 1 is a circuit block diagram showing an example of a configuration of a front end portion corresponding to a high-frequency circuit device according to a first embodiment of the present invention.
FIG. 2 is a circuit block diagram showing an example of a configuration of a front end portion corresponding to a high-frequency circuit device according to a second embodiment of the present invention.
FIG. 3 is a circuit block diagram showing an example of a configuration of a front end portion corresponding to a high-frequency circuit device according to a third embodiment of the present invention.
FIG. 4 is a circuit block diagram showing an example of a front end portion corresponding to a high-frequency circuit device according to a fourth embodiment of the present invention.
FIG. 5 is a circuit block diagram showing an example of a configuration of a front end portion corresponding to a high-frequency circuit device according to a fifth embodiment of the present invention.
FIG. 6 is a circuit block diagram showing an example of a configuration of a front end portion in a conventional dual band mobile phone.

Hereinafter, the present invention will be described by way of preferred embodiments with reference to the appended drawings. The descriptions of the embodiments are directed to an example of a high-frequency circuit device used in a dual band mobile phone conforming to the GSM and DCS systems, in which the present invention is applied to a GSM circuit and exhibits a particularly high degree of effectiveness.

### First Embodiment

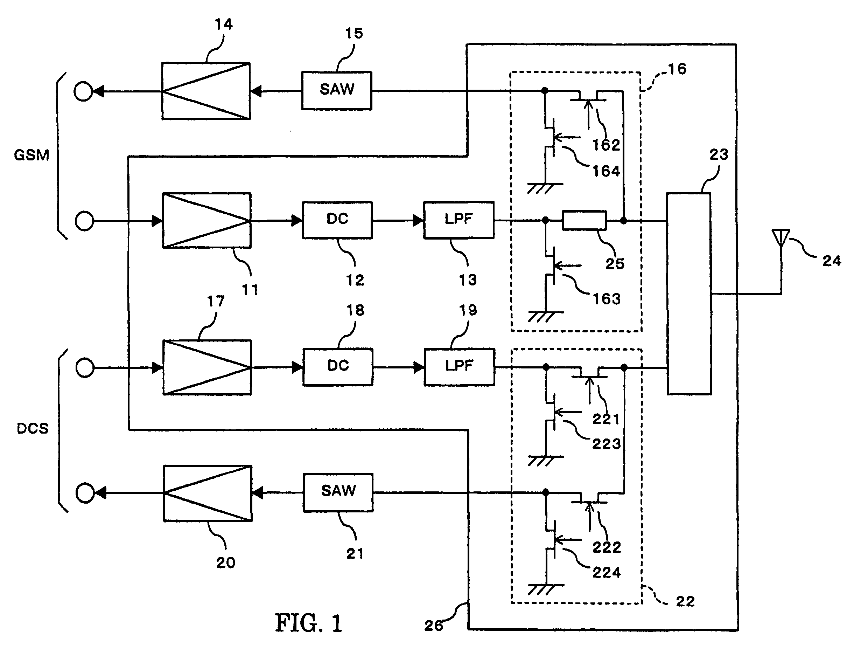

FIG. 1 is a circuit block diagram showing an example of a configuration of a front end portion corresponding to a high-frequency circuit device according to a first embodiment of the present invention. In FIG. 1, like reference numerals indicate like components having the same configurations and functions as those described in regard to the conventional technique with reference to FIG. 6, for which duplicate descriptions are omitted.

The embodiment shown in FIG. 1 is different from the configuration according to the conventional technique shown in FIG. 6 in that a line 25 for phase adjustment is provided in the first high-frequency switch circuit 16 in the GSM circuit in place of the first transmission-side switching element 161 connected in series with the signal path.

The line 25 for phase adjustment is formed of a microstrip line, a strip line or the like that has a length corresponding to 1/4 of a wavelength in the frequency band of approximately 900 MHz corresponding to the GSM circuit and rotates the phase by 1/4 of the wavelength. By the line 25 for phase adjustment with the above-mentioned configuration, the side of the diplexer 23 and the antenna 24 is brought to a state of low impedance, namely a short-circuited state when viewed from the side of a first transmission amplifier 11, while the side of the first transmission amplifier 11 is brought to a state of high impedance, namely an open-circuit state when viewed from the side of the diplexer 23 and the antenna 24.

In the transmitting operation, the second transmission-side switching element 163 is switched off, so that a transmission signal from the first transmission amplifier 11 is coupled into the antenna 24 by the diplexer 23 via a directional coupler 12, a low-pass filter 13, and the line 25 for phase adjustment that is in a short-circuited state.

Furthermore, in the receiving operation, the second transmission-side switching element 163 is switched on to short a transmission signal path. However, by virtue of the line 25 for phase adjustment, the downstream side viewed from the antenna 24 is in an open-circuit state. Therefore, a reception signal from the antenna 24 that has been distributed by the diplexer 23 is supplied to the first reception amplifier 14 via the first reception-side switching element 162 that is in an on-state and a surface acoustic wave filter 15 without leaking to the side of the transmission signal path.

Furthermore, the first and second transmission amplifiers 11 and 17, the first and second directional couplers 12 and 18, the first and second low-pass filters 13 and 19, and the first and second high-frequency switch circuits 16 and 22 are integrated into a transmission module 26. Since these circuit components are integrated into the transmission module 26, phase adjustment and impedance adjustment that has been difficult in the conventional techniques because of the transmission amplifiers and high-frequency switch circuits being mounted separately can be realized.

In the following description, the effect provided by the line 25 for phase adjustment will be explained more specifically. The line 25 for phase adjustment produces a transmission loss of not more than 0.1 dB when viewed from the first transmission amplifier 11. Thus, the line 25 for phase adjustment can achieve a reduction in transmission loss of 0.6 dB compared with the conventional case where the first switching element 161 is a pin diode, and a reduction of 0.3 dB compared with the case where the first switching element 161 is a GaAs field-effect transistor.

Assuming that the first transmission amplifier 11 in the GSM circuit requires a transmission output of 35 dBm at an efficiency of 50%, a current of as large as about 1.8 A is passed through the first transmission amplifier 11. In this case, according to this embodiment, a transmission loss is reduced by 0.3 dB to 0.6 dB, and thus the transmission output is only required to be as small as 34.7 dBm to 34.4 dBm, thereby allowing a reduction in current consumption of as much as 200 mA to 400 mA to be realized.

### Second Embodiment

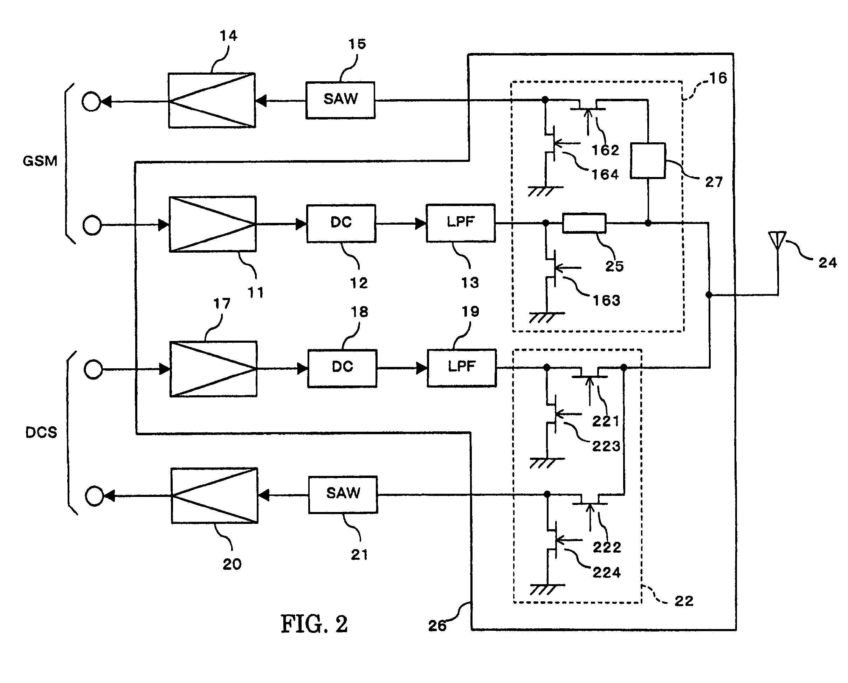

FIG. 2 is a circuit block diagram showing an example of a configuration of a front end portion corresponding to a high-frequency circuit device according to a second embodiment of the present invention. In FIG. 2, like reference numerals indicate like components having the same configurations and functions as those described with regard to the first embodiment shown in FIG. 1, for which duplicate descriptions are omitted.

The embodiment shown in FIG. 2 is different from the first embodiment in that a matching circuit 27 for reception is provided instead of the diplexer 23 shown in FIG. 1.

In this embodiment, switching elements in a first high-frequency switch circuit 16 and a second high-frequency switch circuit 22 are each formed of a GaAs field-effect transistor, and thus generation of harmonics is suppressed when switching is performed, thereby eliminating the need for the diplexer 23. Accordingly, in a receiving operation, reception signals from the antenna 24 are transmitted directly to the first high-frequency switch circuit 16 and the second high-frequency switch circuit 22. Further, in the transmitting operation, transmission signals from the first high-frequency switch circuit 16 and the second high-frequency switch circuit 22 are transmitted directly to the antenna 24. Thus, switching of signal paths is performed between the receiving operation and the transmitting operation.

In this embodiment, a line 25 for phase adjustment is adjusted so as to have a length corresponding to 1/4 of a wavelength in the frequency band of approximately 1.8 GHz corresponding to the DCS circuit rather than 1/4 of a wavelength in the frequency band of approximately 900 MHz corresponding to the GSM circuit employed in the first embodiment. Furthermore, with respect to a frequency band of approximately 1.9 GHz conforming to a PCS (Personal Communication System) system that has been used frequently in North America, when a second transmission amplifier 17 in the DCS circuit is used so as to correspond to a wider frequency band, the line 25 for phase adjustment is adjusted so as to have a length corresponding to 1/4 of a wavelength in the PCS frequency band of approximately 1.9 GHz, or 1/4 of a wavelength in an overlapping frequency band between the DCS frequency band of approximately 1.8 GHz and the PCS frequency band of approximately 1.9 GHz.

This adjustment of the line 25 for phase adjustment causes an impedance shift in a first reception amplifier 14 in the GSM circuit. Therefore, the impedance of the first reception amplifier 14 in the GSM circuit in operation is adjusted by the matching circuit 27 for reception.

According to this embodiment, the diplexer 23 is no longer needed, and thus a transmission loss of about 0.2 dB produced by the diplexer 23 is eliminated, thereby allowing a further reduction in current consumption of 200 mA to be realized.

### Third Embodiment

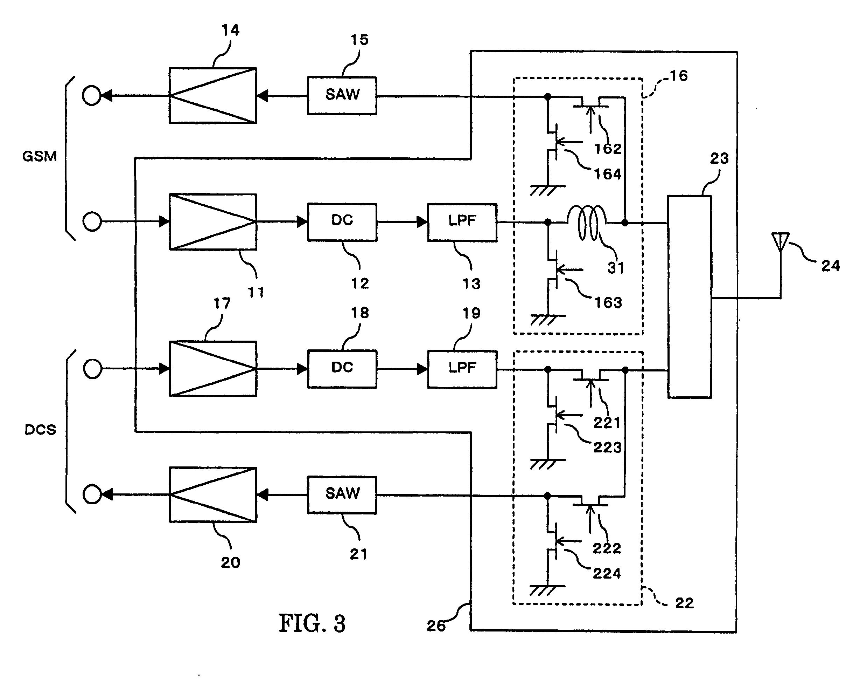

FIG. 3 is a circuit block diagram showing an example of a configuration of a front end portion corresponding to a high-frequency circuit device according to a third embodiment of the present invention. In FIG. 3, like reference numerals indicate like components having the same configurations and functions as those described with regard to the first embodiment shown in FIG. 1, for which duplicate descriptions are omitted.

The embodiment shown in FIG. 3 is different from the first embodiment in that an inductor 31 for phase adjustment is used in place of the line 25 for phase adjustment shown in FIG. 1.

The phase characteristic of the inductor 31 for phase adjustment can be adjusted by using a discrete component as the inductor, by using a spiral inductor pattern formed on a substrate, or by changing the length of the inductor 31 for phase adjustment using wire.

In this embodiment, as shown in FIG. 3, a diplexer 23 is provided. However, needless to say, if the high-frequency switch circuits are formed of GaAs field-effect transistor switches as in the second embodiment, the diplexer 23 can be eliminated.

### Fourth Embodiment

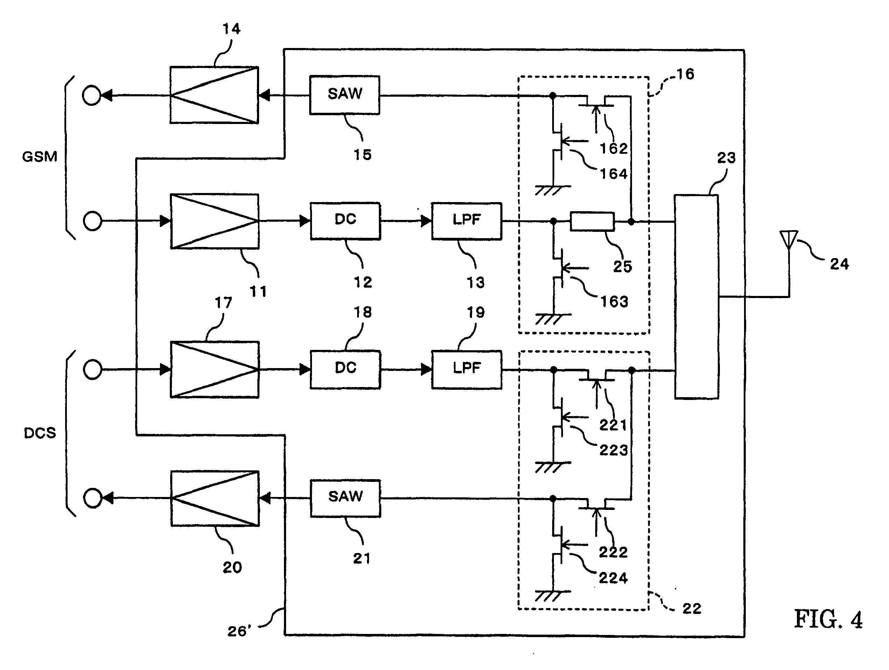

FIG. 4 is a circuit block diagram showing an example of a configuration of a front end portion corresponding to a high-frequency circuit device according to a fourth embodiment of the present invention. In FIG. 4, like reference numerals indicate like components having the same configurations and functions as those described with regard to the first embodiment shown in FIG. 1, for which duplicate descriptions are omitted.

The embodiment shown in FIG. 4 is different from the first and second embodiments in that a transmission module 26' houses a first surface acoustic wave filter 15 and a second surface acoustic wave filter 21 that are provided on the reception sides.

### Fifth Embodiment

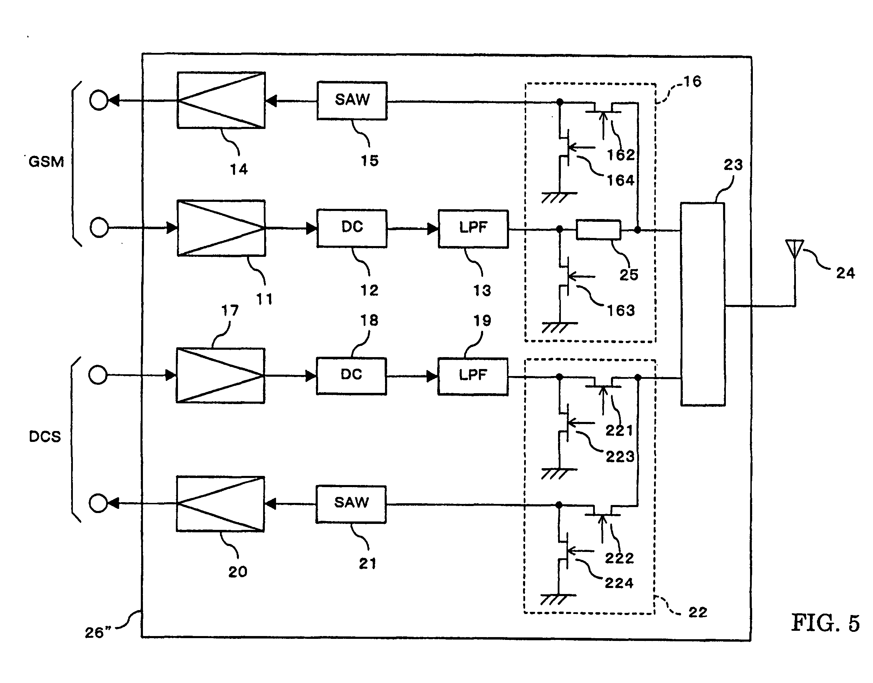

FIG. 5 is a circuit block diagram showing an example of a configuration of a front end portion corresponding to a high-frequency circuit device according to a fifth embodiment of the present invention. In FIG. 5, like reference numerals indicate like components having the same configurations and functions as those described with regard to the fourth embodiment shown in FIG. 4, for which duplicate descriptions are omitted.

The embodiment shown in FIG. 5 is different from the fourth embodiment in that the transmission module 26' houses a first reception amplifier 14 and a second reception amplifier 20 in addition to the first surface acoustic wave filter 15 and the second surface acoustic wave filter 21 to form a transmission/reception module 26".

In the above first to fifth embodiments, the descriptions are directed to the case where the high-frequency circuit device is applied to a dual band mobile phone conforming to a combination of the GSM system and the DCS system (or the PCS system). However, the present invention is not limited thereto. For example, the present invention also is applicable to a combination of an AMPS (Advanced Mobile Phone Services) system and a PCS system that are employed in North America, a combination of a GSM system and a DECT (Digital European Cordless Telephone) system that are employed in Europe, and a combination of a PDC (Personal Digital Cellular) system and a PHS (Personal Handy-phone System) system that are employed in Japan and the like.

Furthermore, in the above first to fifth embodiments, the descriptions were directed to the case where the device has two circuits as the transmission and reception signal paths. However, the same effect also can be obtained when the device has three or more circuits as transmission and reception signal paths.

As described in the foregoing discussion, the present invention allows the attainment of the particular effect of realizing a high-frequency circuit device that can be used in a multiband mobile phone or the like and which particularly reduces transmission losses in high-frequency switch circuits so that the output power of the transmission amplifiers can be decreased, thereby achieving a substantial reduction in power consumption. The present invention also allows a mobile communication apparatus mounting the high-frequency circuit device.

Furthermore, the circuit components including first and second transmission amplifiers, first and second high-frequency switch circuits, and other circuit components as required are integrated into a module. Thus, size and weight reductions can be achieved, and phase adjustment and impedance adjustment can be performed easily in a line for phase adjustment.

Moreover, the high-frequency circuit device is formed into the module. Thus, size and weight reductions and a reduction in power consumption can be achieved, and a highly advantageous effect can be obtained from a practical viewpoint when the high-frequency circuit device is applied to a mobile communication apparatus such as a mobile phone.

## Claims

1. A high-frequency circuit device, comprising:
a plurality of transmission ampliners (11,17) for amplifying and supplying to an antenna (24) a plurality of transmission signals corresponding to a plurality of different frequency bands;
a plurality of reception amplifiers (14,20) for amplifying a plurality of reception signals from the antenna corresponding to a plurality of different frequency bands; and
a plurality of high-frequency switch circuits (16,22) corresponding respectively to each of the plurality of frequency bands that are provided between the plurality of transmission amplifiers and the plurality of reception amplifiers and the antenna, and perform selecting of signal paths corresponding to a desired frequency band and switching of the signal paths between a transmitting operation and a receiving operation,
wherein the plurality of switch circuits are composed at least of a first high-frequency switch circuit (16) and a second high-frequency switch circuit (22), the first high-frequency switch circuit being provided so as to correspond to a lower frequency band of the plurality of frequency bands, and the second high-frequency switch circuit being provided so as to correspond to a higher frequency band of the plurality of frequency bands;
the first high-frequency switch circuit includes:
a phase adjusting unit (26) connected in series with a first transmission signal path;
a first switching element (162) connected in series with a first reception signal path; and
second switching elements (163,164) connected between the first transmission and reception signal paths and ground potentials and on the first transmission amplifier side of the phase adjusting unit and on the first reception amplifier side of the first switching element, respectively; and
the second high-frequency switch circuit includes:
third switching elements (221, 222) connected in series with a second transmission signal path and a second reception signal path, respectively;
fourth switching elements (223, 224) connected between the second transmission and reception signal paths and ground potentials and on the second transmission amplifier side of one of the third switching elements and on the second reception amplifier side of the other of the third switching elements, respectively

2. The high-frequency circuit device according to claim 1, further comprising a diplexex (23) that is connected between the first and second high-frequency switch circuits and the antenna so as to couple a transmission signal from the first high-frequency switch circuit or the second high-frequency switch circuit into the antenna in the transmitting operation and distribute a reception signal from the antenna to the first high-frequency switch circuit or the second high-frequency switch circuit in the receiving operation,
wherein the phase adjusting unit is formed of a strip line having a length corresponding to 1/4 of a wavelength in the lower frequency band.

3. The high-frequency circuit device according to claim 1,
wherein the first and second high-frequency switch circuits are connected directly with the antenna;
the phase adjusting unit is formed of a strip line having a length corresponding to 1/4 of a wavelength in the higher frequency band; and
the first high-frequency switch circuit includes a matching circuit for reception that is connected between the strip line and the first switching element and performs impedance matching.

4. The high-frequency circuit device according to claim 3,
wherein the first to fourth switching elements are formed of a GaAs field-effect transistor, respectively.

5. The high-frequency circuit device according to any one of claims 1 to 4,
wherein the first and second transmission amplifiers and the first and second high-frequency switch circuits are integrated into a module on a common substrate.

6. The high-frequency circuit device according to claim 5,
wherein the first and second reception amplifiers are integrated into the module on the common substrate.

7. The high-frequency circuit device according to claim 5 or 6 when dependent on claim 2,
wherein the diplexer is integrated into the module on the common substrate.

8. The high-frequency circuit device according to any one of claims 5 to 7, further comprising:
first and second directional couplers that receive output signals from the first and second transmission amplifiers, respectively; and
first and second low-pass filters that receive output signals from the first and second directional couplers and output to the first and second high-frequency switch circuits, respectively,
wherein the first and second directional couplers and the first and second low-pass filters are integrated into the module on the common substrate.

9. The high-frequency circuit device according to any one of claims 5 to 8, further comprising first and second surface acoustic wave filters that receive reception signals from the first and second high-frequency switch circuits, respectively, and output to the first and second reception amplifiers, respectively,
wherein the first and second surface acoustic wave filters are integrated into the module on the common substrate.

10. A mobile communication apparatus comprising the high-frequency circuit device according to any one of the preceding claims.

## Patentansprüche

1. Hochfrequenzschaltungsvorrichtung mit folgendem:
einer Mehrzahl von Sendeverstärkern (11, 17) zum Verstärken und Zuführen einer Mehrzahl von Sendesignalen entsprechend einer Mehrzahl verschiedener Frequenzbänder zu einer Antenne (24);
einer Mehrzahl von Empfangsverstärkern (14, 20) zum Verstärken einer Mehrzahl von Empfangssignalen von der Antenne entsprechend einer Mehrzahl verschiedener Frequenzbänder; und
einer Mehrzahl von Hochfrequenz-Schalterstromkreisen (16, 22) entsprechend jeweils jedem der Mehrzahl von Frequenzbändern, die zwischen der Mehrzahl von Sendeverstärkern und der Mehrzahl von Empfangsverstärkern vorgesehen sind und das Auswählen von Signalwegen entsprechend einem gewünschten Frequenzband und Umschalten der Signalwege zwischen einer Sendeoperation und einer Empfangsoperation durchführen,
wobei die Mehrzahl von Schalterstromkreisen aus mindestens einem ersten Hochfrequenz-Schalterstromkreis (16) und einem zweiten Hochfrequenz-Schalterstromkreis (22) bestehen, wobei der erste Hochfrequenz-Schalterstromkreis vorgesehen ist, um einem niedrigeren Frequenzband der Mehrzahl von Frequenzbändern zu entsprechen, und der zweite Hochfrequenz-Schalterstromkreis vorgesehen ist, um einem höheren Frequenzband der Mehrzahl von Frequenzbändern zu entsprechen;
der erste Hochfrequenz-Schalterstromkreis folgendes umfaßt:
eine in Reihe mit einem ersten Sende-Signalweg geschaltete Phaseneinstelleinheit (25);
ein erstes in Reihe mit einem ersten EmpfangsSignalweg geschaltetes Schaltglied (162); und
zweite, zwischen den ersten Sende- und Empfangs-Signalwegen und Erdpotentialen und auf der Seite des ersten Sendeverstärkers der Phaseneinstelleinheit bzw. der Seite des ersten Empfangsverstärkers des ersten Schaltgliedes geschaltete Schaltglieder (163, 164); und
der zweite Hochfrequenz-schalterstromkreis folgendes umfaßt:
dritte, in Reihe mit einem zweiten Sende-Signalweg bzw. einem zweiten Empfangssignalweg geschaltete Schaltglieder (221, 222); und
vierte, zwischen den zweiten Sende- und Empfangs-Signalwegen und Erdpotentialen und auf der Seite des zweiten Sendeverstärkers eines der dritten Schaltglieder bzw. der Seite des zweiten Empfangsverstärkers des anderen der dritten Schaltglieder geschaltete Schaltglieder (223, 224) .

2. Hochfrequenzschaltungsvorrichtung nach Anspruch 1, weiterhin mit einem Diplexer (23), der zwischen den ersten und zweiten Hochfrequenz-Schalterstromkreis und die Antenne geschaltetet ist, um bei der Sendeoperation ein Sendesignal vom ersten Hochfrequenz-Schalterstromkreis oder dem zweiten Hochfrequenz-Schalterstromkreis in die Antenne einzukoppeln und bei der Empfangsoperation ein Empfangssignal von der Antenne an den ersten Hochfrequenz-Schalterstromkreis oder den zweiten Hochfrequenz-Schalterstromkreis zu verteilen, wobei die Phaseneinstelleinheit aus einer Streifenleitung mit einer Länge entsprechend 1/4 einer Wellenlänge im niederigeren Frequenzband gebildet wird.

3. Hochfrequenzschaltungsvorrichtung nach Anspruch 1,
wobei der erste und zweite Hochfrequenz-Schalterstromkreis direkt mit der Antenne verbunden sind;
die Phaseneinstelleinheit aus einer Streifenleitung mit einer Länge entsprechend 1/4 einer Wellenlänge im höheren Frequenzband gebildet wird; und
der erste Hochfrequenz-Schalterstromkreis eine Anpaßschaltung für Empfang umfaßt, die zwischen die Streifenleitung und das erste Schaltglied geschaltet ist und Impedanzanpassung durchführt.

4. Hochfrequenzschaltungsvorrichtung nach Anspruch 3,
wobei das erste bis vierte Schaltglied jeweils aus einem GaAs-Feldeffekttransistor gebildet werden.

5. Hochfrequenzschaltungsvorrichtung nach einem der Ansprüche 1 bis 4,
wobei der erste und zweite Sendeverstärker und der erste und zweite Hochfrequenz-Schalterstromkreis auf einem gemeinsamen Substrat in ein Modul integriert sind.

6. Hochfrequenzschaltungsvorrichtung nach Anspruch 5,
wobei der erste und zweite Empfangsverstärker auf einem gemeinsamen Substrat in das Modul integriert sind.

7. Hochfrequenzschaltungsvorrichtung nach Anspruch 5 oder 6 bei Abhängigkeit von Anspruch 2,
wobei der Diplexer auf dem gemeinsamen Substrat in das Modul integriert ist.

8. Hochfrequenzschaltungsvorrichtung nach einem der Ansprüche 5 bis 7, weiterhin mit folgendem:
ersten und zweiten Richtkopplern, die Ausganggssignale von dem ersten bzw, zweiten Sendeverstärker empfangen; und
ersten und zweiten Tiefpaßfiltern, die Ausgangssignale vom ersten und zweiten Richtkoppler empfangen und zum ersten bzw. zweiten Hochfrequenz-Schalterstromkreis ausgeben,
wobei der erste und zweite Richtkoppler und das erste und zweite Tiefpaßfilter auf dem gemeinsamen Substrat in das Modul integriert sind.

9. Hochfrequenzschaltungsvorrichtung nach einem der Ansprüche 5 bis 8, weiterhin mit ersten und zweiten Oberflächenwellenfiltern, die Empfangssignale vom ersten bzw. zweiten Hochfrequenz-Schalterstromkreis empfangen und zum ersten bzw. zweiten Empfangsverstärker ausgeben,
wobei das erste und zweite Oberflächenwellenfilter auf dem gemeinsamen Substrat in das Modul integriert sind.

10. Mobiles Kommunikationsgerät mit der Hochfreguenzschaltungsvorrichtung nach einem-der vorhergehenden Ansprüche.

## Revendications

1. Dispositif à circuits haute fréquence, comprenant:
une pluralité d'amplificateurs d'émission (11, 17) pour amplifier et fournir à une antenne (24) une pluralité de signaux d'émission correspondant à une pluralité de bandes de fréquences différentes ;
une pluralité d'amplificateurs de réception (14, 20) pour amplifier une pluralité de signaux de réception provenant de l'antenne correspondant à une pluralité de bandes de fréquences différentes ; et
une pluralité de circuits de commutation haute fréquence (16, 22) correspondant respectivement à chacune de la pluralité de bandes de fréquences qui sont fournis entre la pluralité d'amplificateurs d'émission et la pluralité d'amplificateurs de réception et l'antenne, et effectuant une sélection de trajets de signaux correspondant à une bande de fréquences désirée et une commutation des trajets de signaux entre une opération d'émission et une opération de réception,
dans lequel la pluralité de circuits de commutation est composée au moins d'un premier circuit de commutation haute fréquence (16) et d'un deuxième circuit de commutation haute fréquence (22), le premier circuit de commutation haute fréquence étant fourni de façon à correspondre à une bande de fréquences inférieure de la pluralité de bandes de fréquences, et le deuxième circuit de commutation haute fréquence étant fourni de façon à correspondre à une bande de fréquences supérieure de la pluralité de bandes de fréquences ;
le premier circuit de commutation haute fréquence comporte :
une unité de réglage de phase (25) connectée en série à un premier trajet de signal d'émission ;
un premier élément de commutation (162) connecté en série à un premier trajet de signal de réception ; et
des deuxièmes éléments de commutation (163, 164) connectés entre les premiers trajets de signaux d'émission et de réception et des potentiels de terre et du côté du premier amplificateur d'émission de l'unité de réglage de phase et du côté du premier amplificateur de réception du premier élément de commutation, respectivement ; et
le deuxième circuit de commutation haute fréquence comporte:
des troisièmes éléments de commutation (221, 222) connectés en série avec un deuxième trajet de signal d'émission et un deuxième trajet de signal de réception, respectivement ; et
des quatrièmes éléments de commutation (223, 224) connectés entre les deuxièmes trajets de signaux d'émission et de réception et des potentiels de terre et du côté du deuxième amplificateur d'émission de l'un des troisièmes éléments de commutation et du côté du deuxième amplificateur de réception de l'autre des troisièmes éléments de commutation, respectivement.

2. Dispositif à circuits haute fréquence selon la revendication 1, comprenant en outre un diplexeur (23) qui est connecté entre les premier et deuxième circuits de commutation haute fréquence et l'antenne de façon à coupler un signal d'émission provenant du premier circuit de commutation haute fréquence ou du deuxième circuit de commutation haute fréquence à l'antenne dans l'opération d'émission et à distribuer un signal de réception provenant de l'antenne au premier circuit de commutation haute fréquence ou au deuxième circuit de commutation haute fréquence dans l'opération de réception,
dans lequel l'unité de réglage de phase est formée d'une ligne ruban d'une longueur correspondant à ¼ d'une longueur d'onde dans la bande de fréquences inférieure.

3. Dispositif à circuits haute fréquence selon la revendication 1,
dans lequel les premier et deuxième circuits de commutation haute fréquence sont connectés directement à l'antenne ;
l'unité de réglage de phase est formée d'une ligne ruban d'une longueur correspondant à ¼ d'une longueur d'onde dans la bande de fréquences supérieure ; et
le premier circuit de commutation haute fréquence comporte pour la réception un circuit d'adaptation qui est connecté entre la ligne ruban et le premier élément de commutation et qui effectue une adaptation d'impédance.

4. Dispositif à circuits haute fréquence selon la revendication 3,
dans lequel les premiers aux quatrièmes éléments de commutation sont formés d'un transistor à effet de champ GaAs, respectivement.

5. Dispositif à circuits haute fréquence selon l'une quelconque des revendications 1 à 4,
dans lequel les premier et deuxième amplificateurs d'émission et les premier et deuxième circuits de commutation haute fréquence sont intégrés dans un module sur un substrat commun.

6. Dispositif à circuits haute fréquence selon la revendication 5,
dans lequel les premier et deuxième amplificateurs de réception sont intégrés dans le module sur le substrat commun.

7. Dispositif à circuits haute fréquence selon la revendication 5 ou 6 dépendante de la revendication 2,
dans lequel le diplexeur est intégré dans le module sur le substrat commun.

8. Dispositif à circuits haute fréquence selon l'une quelconque des revendications 5 à 7, comprenant en outre:
des premier et deuxième coupleurs directifs qui reçoivent des signaux de sortie des premier et deuxième amplificateurs d'émission, respectivement ; et
des premier et deuxième filtres passe-bas qui reçoivent des signaux de sortie des premier et deuxième coupleurs directifs et sortent des signaux allant aux premier et deuxième circuits de commutation haute fréquence, respectivement,
dans lequel les premier et deuxième coupleurs directifs et les premier et deuxième filtres passe-bas sont intégrés dans le module sur le substrat commun.

9. Dispositif à circuits haute fréquence selon l'une quelconque des revendications 5 à 8, comprenant en outre des premier et deuxième filtres à ondes acoustiques de surface qui reçoivent des signaux de réception des premier et deuxième circuits de commutation haute fréquence, respectivement, et sortent des signaux allant aux premier et deuxième amplificateurs de réception, respectivement,
dans lequel les premier et deuxième filtres à ondes acoustiques de surface sont intégrés dans le module sur le substrat commun.

10. Appareil de communication mobile comprenant le dispositif à circuits haute fréquence selon l'une quelconque des revendications précédentes.
